# FASCICULE DE BREVET EUROPEEN

(11) **EP 2 710 264 B1**
(45) Date de publication et mention de la délivrance du brevet: **23.08.2017**
(21) Numéro de dépôt: 12717187.4
(22) Date de dépôt: 16.04.2012
(51) Int. Cl.: F04B 35/04, F04B 39/12, F04B 53/22, F04C 23/00, H02K 5/04

(54) **COMPRESSEUR ELECTRIQUE MODULAIRE AVEC DISPOSITIF DE FIXATION INTEGRE**
MODULARER ELEKTRISCHER VERDICHTER MIT EINGEBAUTER SICHERUNGSVORRICHTUNG
MODULAR ELECTRIC COMPRESSOR INCLUDING A BUILT-IN SECURING DEVICE

(30) Priorité: 19.05.2011 FR 1101545
(43) Date de publication de la demande: 26.03.2014
(73) Titulaire: Valeo Japan Co., Ltd., Saitama 360-0193 (JP)
(72) Inventeur: GUITARI, Imed, F-78990 Elancourt (FR); BELLET, Augustin, F-28700 La Chapelle-d'Aunainville (FR); DEGUCHI, Hironobu, Higashimatsuyama-shi, Saitama 355-0028 (JP); OKAKURA, Hiroaki, Higashimatsuyama-shi Saitama 355-0045 (JP)
(74) Mandataire: Neuviale, Bertrand
(86) Numéro de dépôt international: PCT/EP2012/001630
(87) Numéro de publication internationale: WO 2012/156011

(56) Documents cités:
- EP-A2- 2 251 958
- WO-A1-2010/131671
- US-A1- 2002 025 265

## Description

Le secteur technique de la présente invention est celui des compresseurs électriques équipant un véhicule automobile, par exemple, pour la circulation d'un fluide réfrigérant à l'intérieur d'un circuit de climatisation du véhicule.

Un compresseur électrique comprend de manière classique un mécanisme de compression, entraîné par un moteur électrique, afin de mettre sous pression le fluide réfrigérant dans le circuit de climatisation. Pour alimenter le moteur électrique, le compresseur comprend en outre un onduleur pour convertir l'énergie électrique du moteur du véhicule en une énergie électrique adaptée pour le moteur du compresseur. A titre d'exemple, l'onduleur est adapté pour convertir un courant monophasé en un courant triphasé.

De tels compresseurs sont connus dans la littérature, voir par exemple US2002/0025265 A1. Le document JP2003-343438A décrit un compresseur électrique (non représenté) comportant un boîtier de compression dans lequel est monté le mécanisme de compression, un boîtier de moteur dans lequel est monté le moteur électrique et un boîtier d'onduleur dans lequel est monté l'onduleur. Pour relier ensemble les boîtiers, les surfaces extérieures des boîtiers comprennent des brides de fixation adaptées pour permettre le passage de vis de fixation. Les vis de fixation permettent ainsi de solidariser la bride de fixation du boîtier de moteur à celle du boîtier d'onduleur. Les brides de fixation sont en saillie depuis les surfaces extérieures des boîtiers ce qui augmente l'encombrement du compresseur électrique. En outre, les brides de fixation en saillie peuvent venir en contact avec d'autres composants du moteur et les endommager ce qui présente un inconvénient.

Pour éliminer au moins certains de ces inconvénients, il a été proposé de fixer les boîtiers les uns aux autres avec des vis de fixation s'étendant intérieurement aux boîtiers. La figure 1 représente une vue en coupe d'un compresseur électrique, présenté dans le document JP2005-291004, dans lequel le boîtier d'onduleur 10 logeant l'onduleur 1, le boîtier de moteur 20 logeant le moteur électrique 2 et le boîtier de compression 30 logeant le mécanisme de compression 3 sont reliés les uns aux autres en utilisant des vis de fixation 4 de grande longueur s'étendant à l'intérieur du boîtier de moteur 20.

Des vis de fixation de grande longueur présentent de nombreux inconvénients. Elles présentent un coût de fabrication élevé par comparaison à des vis de petite longueur. En outre, au cours de leur fabrication, les vis de fixation subissent une étape de durcissement thermique qui engendre des tensions de surface résiduelles qui sont fonction de la longueur du dispositif de fixation et qui engendrent un fléchissement ou flambage du dispositif de fixation. Plus une vis de fixation est longue, plus sa fabrication est délicate.

Le but de la présente invention est d'éliminer au moins certains des inconvénients décrits ci-dessus en modifiant l'assemblage du compresseur. Cela permet avantageusement d'assembler le compresseur sans recourir à des vis de fixation de grande longueur.

A cet effet, l'invention concerne un compresseur électrique comprenant un mécanisme de compression, un moteur électrique d'entraînement du mécanisme de compression, ledit moteur électrique présentant un axe de rotation, un onduleur d'alimentation dudit moteur électrique, l'onduleur étant monté dans un boîtier d'onduleur, le mécanisme de compression étant monté dans un boîtier de compression, le moteur électrique étant monté dans un boîtier s'étendant longitudinalement selon l'axe de rotation et présentant une première extrémité reliée au boîtier d'onduleur par une pluralité de dispositifs de fixation s'étendant intérieurement au boîtier de moteur, compresseur dans lequel le boîtier de moteur présente une seconde extrémité, opposée à la première extrémité par rapport au moteur électrique, reliée au boîtier de compression par une pluralité de dispositifs de solidarisation distincts des dispositifs de fixation.

L'assemblage du compresseur au moyen de dispositifs de fixation et de solidarisation distincts permet de recourir à des dispositifs de faible longueur qui possèdent un coût de fabrication faible et dont le procédé de fabrication est aisé.

De préférence, chaque dispositif de fixation possède une longueur longitudinale inférieure à la longueur longitudinale du boîtier de moteur. Un tel dispositif de fixation possède une longueur très réduite ce qui est avantageux.

De préférence, la pluralité de dispositifs de solidarisation s'étend intérieurement au boîtier de compression. Le compresseur ne comprend pas de partie saillante et possède ainsi un encombrement faible. La seconde extrémité du boîtier de moteur se présente sous la forme d'une embase plane transversale, ladite embase comportant une pluralité de cavités longitudinales de positionnement d'un dispositif de fixation.

Ainsi, le dispositif de fixation est orienté de manière longitudinale dans le boîtier de moteur lorsqu'il est positionné dans sa cavité.

De manière avantageuse, chaque dispositif de fixation comprend un corps s'étendant dans un trou du boîtier de moteur et une tête en butée avec le fond de la cavité longitudinale de positionnement.

Les cavités de positionnement permettent avantageusement de limiter la longueur d'un dispositif de fixation ce qui est avantageux.

Selon un aspect de l'invention, la seconde extrémité du boîtier de moteur se présente sous la forme d'une embase plane transversale, ladite embase comportant une pluralité de taraudages de réception d'un dispositif de solidarisation.

Les dispositifs de solidarisation sont réceptionnés par l'embase tandis que les dispositifs de fixation sont introduits dans l'embase. L'embase assure de manière avantageuse une fixation mécanique optimale de l'ensemble du compresseur en formant une interface de fixation du dispositif de solidarisation et de fixation.

De manière préférée, au moins un taraudage est formé dans l'embase entre deux cavités consécutives de manière à répartir les dispositifs de fixation et les dispositifs de solidarisation sur l'embase. De manière avantageuse, les dispositifs de fixation n'interfèrent pas avec les dispositifs de solidarisation.

De préférence encore, la seconde extrémité du boîtier de moteur se présente sous la forme d'une embase plane transversale, ladite embase comprend au moins une lumière traversante agencée pour guider un fluide réfrigérant vers les moyens de compression. L'embase assure de manière avantageuse une fonction de guidage du fluide réfrigérant sans interférer avec les dispositifs de fixation et de solidarisation.

De préférence, le diamètre des dispositifs de fixation est inférieur au diamètre des dispositifs de solidarisation.

Etant donné que la pression dans le boîtier d'onduleur est plus faible que celle dans le boîtier de compression, des dispositifs de fixation de dimensions et d'encombrement plus faibles peuvent être utilisés.

De préférence encore, le nombre de dispositifs de fixation est inférieur au nombre de dispositifs de solidarisation.

Etant donné que la pression dans le boîtier d'onduleur est plus faible que celle dans le boîtier de compression, un nombre restreint de dispositifs de fixation peut être utilisé. Cela permet avantageusement de limiter la masse du compresseur.

Selon un autre aspect de l'invention, le boîtier d'onduleur comprend une pluralité d'excroissances s'étendant longitudinalement dans le boîtier de moteur, chaque excroissance comportant un trou taraudé de réception d'un dispositif de fixation.

Les excroissances permettent avantageusement de limiter la longueur des dispositifs de fixation ce qui est avantageux. Cela évite en outre que les excroissances ne s'étendent dans la cavité du boîtier d'onduleur et empiètent sur l'espace disponible pour installer l'onduleur, en particulier, une carte de circuit imprimé de l'onduleur.

De manière préférée, les excroissances sont en contact avec la périphérie interne du boîtier de moteur. Les excroissances permettent ainsi de centrer le boîtier d'onduleur par rapport au boîtier de moteur.

L'invention sera mieux comprise à la lecture de la description qui va suivre, donnée uniquement à titre d'exemple, et se référant aux dessins annexés sur lesquels :

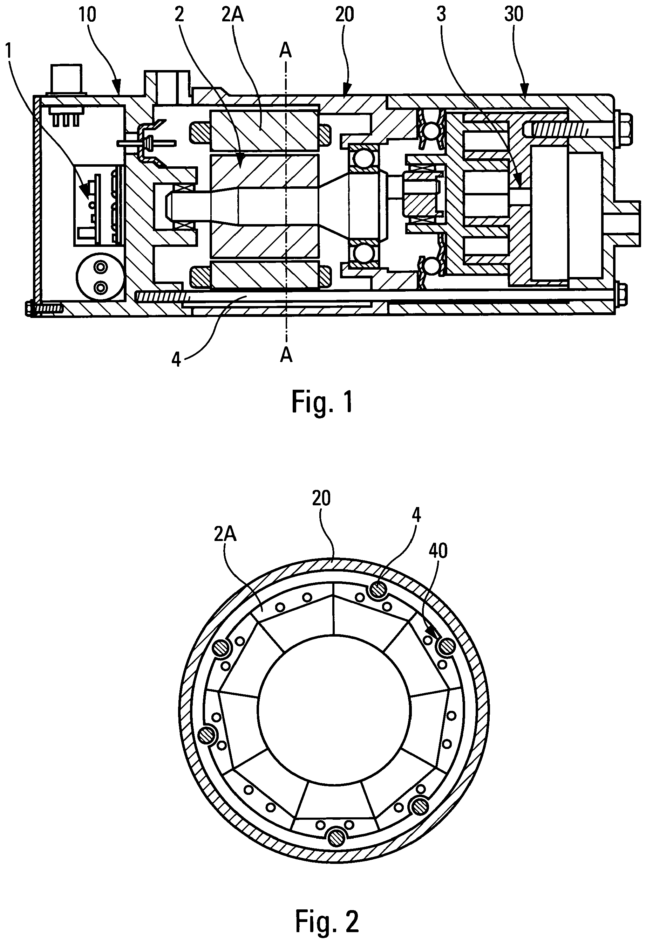

- la figure 1 est une vue en coupe axiale d'un compresseur électrique selon l'art antérieur ;
- la figure 2 est une vue en coupe transversale du compresseur de la figure 1 selon le plan A-A;
- la figure 3 est une vue en coupe axiale d'un compresseur électrique selon l'invention ;
- la figure 4 est une vue en coupe transversale du compresseur de la figure 3 selon le plan B-B;
- la figure 5 est une vue rapprochée de l'interface entre le boîtier de moteur et le boîtier de compression du compresseur de la figure 3 ;
- la figure 6 est une vue rapprochée de l'interface entre le boîtier de moteur et le boîtier d'onduleur du compresseur de la figure 3 ;
- la figure 7 est une vue en coupe transversale de l'interface entre le boîtier de moteur et le boîtier d'onduleur du compresseur selon l'invention ; et
- la figure 8 est une vue en coupe transversale de l'interface entre le boîtier de moteur et le boîtier de compression du compresseur selon l'invention.

Un compresseur électrique 7 selon l'invention va être présenté par la suite pour la circulation d'un fluide réfrigérant à l'intérieur d'un circuit de climatisation d'un véhicule automobile. Il va de soi que le compresseur électrique peut être utilisé pour la compression de fluides de différentes natures et que le compresseur électrique 7 peut être monté sur tout type de dispositif aussi bien mobile que fixe.

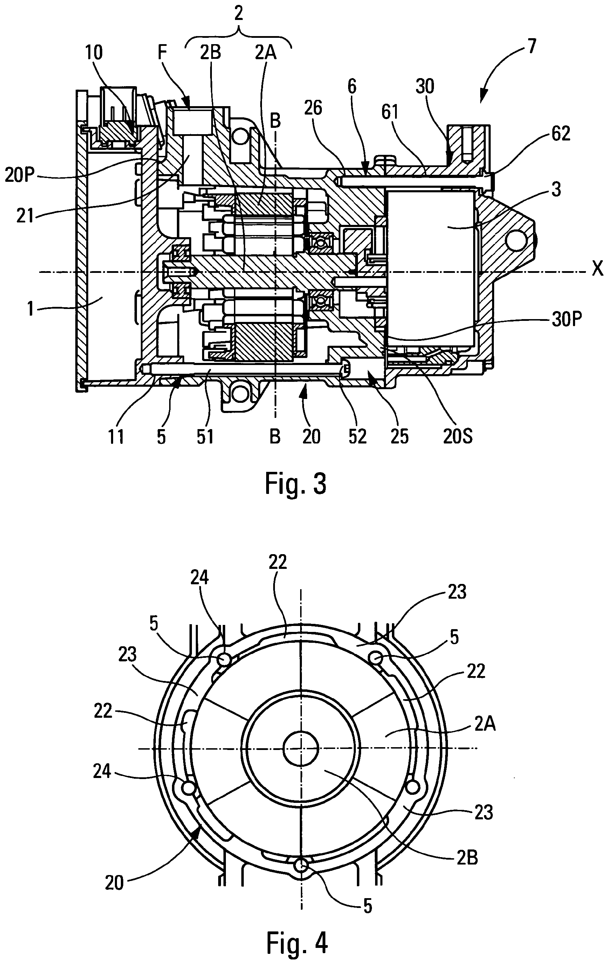

En référence à la figure 3, le compresseur électrique 7 selon l'invention comprend un mécanisme de compression 3, un moteur électrique 2 d'entraînement du mécanisme de compression 3, ledit moteur électrique 2 présentant un axe de rotation X (Figure 3) et un onduleur 1 d'alimentation dudit moteur électrique 2. L'onduleur 1 est monté dans un boîtier d'onduleur 10 et le mécanisme de compression 3 est monté dans un boîtier de compression 30. Le moteur électrique 2 est monté dans un boîtier de moteur 20 s'étendant longitudinalement selon l'axe de rotation X. Le boîtier de moteur 20 est en aluminium ou en alliage d'aluminium de forme circulaire creuse comprenant une paroi périphérique qui délimite un volume interne terminé d'un côté par une première extrémité 20P et de l'autre par une seconde extrémité 20S. Ces deux extrémités 20P, 20S sont ouvertes avant montage des autres composants du compresseur 7. La première extrémité 20P est reliée au boîtier d'onduleur 10 par une pluralité de dispositifs de fixation 5 tandis que la seconde extrémité 20S, opposée à la première extrémité 20P par rapport au moteur électrique 2, est reliée au boîtier de compression 30 par une pluralité de dispositifs de solidarisation 6.

Le mécanisme de compression 3 est du type spirale de compression (Scroll en anglais) ou du type à palettes ou encore du type à pistons, ces exemples étant donnés à titre illustratif sans pour autant limiter la portée de l'invention. L'onduleur 10 (Inverter en anglais) transforme un courant de forme continue en provenance du véhicule, en particulier de la batterie, en un courant de forme sinusoïdale de fréquence variable alimentant le moteur électrique 2.

Comme représenté sur les figures 3 et 4, le moteur 2 comprend un stator 2A de périphérie intégralement circulaire monté de manière solidaire dans le boîtier de moteur 20 et un rotor 2B solidaire de l'arbre du moteur 2 qui tourne intérieurement au stator 2A. En d'autres termes, le stator 2A est placé de manière fixe à l'extérieur du rotor 2B. La forme circulaire du stator 2A est avantageuse car elle limite les pertes magnétiques et optimise le rendement du moteur 2. Par la suite, les termes « interne » et « externe » sont définis radialement par rapport à l'axe X du moteur 2. Ainsi, un cylindre axial comprend une surface interne tournée vers l'axe et une surface externe opposée à sa surface interne.

En référence à la figure 4, le boîtier de moteur 20 comprend à sa périphérie interne une pluralité de protubérances 23 en contact avec la périphérie circulaire du stator 2A. Dans cet exemple, les protubérances 23 se présentent sous la forme de dents radiales, prenant naissance sur la paroi interne du boîtier de moteur 20, dont l'extrémité est curviligne de manière à venir en appui surfacique sur la périphérie circulaire du stator 2A. Les protubérances 23 sont réparties à la périphérie du boîtier de moteur 20 pour maintenir fixement le moteur 2 dans son boîtier 20.

Le boîtier de moteur 20 comprend, à sa périphérie interne et entre deux protubérances 23 consécutives, une pluralité de trous 24 dans lesquels s'étendent un dispositif de fixation 5 comme représenté sur la figure 4. Dans cet exemple, chaque dispositif de fixation 5 s'étend intérieurement au boîtier de moteur 20 afin de ne pas former de partie saillante à l'extérieur du compresseur 7. Le compresseur 7 est ainsi compact. Dans cet exemple, un unique dispositif de fixation 5 s'étend entre deux protubérances consécutives 23 mais il va de soi qu'un plus grand nombre de tels dispositifs pourrait être utilisé entre deux protubérances consécutives 23. Le dispositif de fixation 5 s'inscrit ainsi en totalité dans l'épaisseur du boîtier de moteur 20 mesurée au droit d'une protubérance 23, c'est-à-dire, l'épaisseur radiale de la protubérance 23.

Sur la figure 4, on constate que le boîtier de moteur 20 comprend, également à sa périphérie interne et entre deux protubérances 23 consécutives, une pluralité d'évidements 22 dont la fonction est d'autoriser une circulation du fluide réfrigérant selon la direction de l'axe X du moteur 2. Comme représenté sur la figure 3, le boîtier de moteur 20 comprend un orifice d'admission de fluide réfrigérant 21 qui débouche entre le moteur électrique 2 et le boîtier d'onduleur 10 afin d'introduire du fluide réfrigérant F dans le boîtier de moteur 20. Cet orifice d'admission 21 prend la forme d'une tubulure qui s'étend radialement vers l'extérieur du boîtier de moteur 20 et d'un trou traversant pratiqué dans la paroi du boîtier de moteur 20 au droit de la tubulure. Les évidements 22 sont aptes à canaliser le fluide réfrigérant F entre la périphérie interne du boîtier de moteur 20 et la périphérie externe du stator 2A. Cette canalisation possède une section de passage suffisante pour permettre de refroidir le stator 2A par circulation du flux de fluide réfrigérant F sans engendrer de perte de charge. De manière avantageuse, les dispositifs de fixation 5 et le stator 2A du moteur 2 ne perturbent pas la circulation du fluide réfrigérant F ce qui garantit un écoulement du fluide optimal.

Du fait de la présence de protubérances radiales 23 extérieurement au stator 2A, un espace annulaire est avantageusement formé entre la périphérie du boîtier de moteur 20 et la périphérie du stator 2A afin de permettre la formation des trous 24 et des évidements 22 permettant, d'une part, la fixation du compresseur 7 et, d'autre part, la circulation du fluide réfrigérant F.

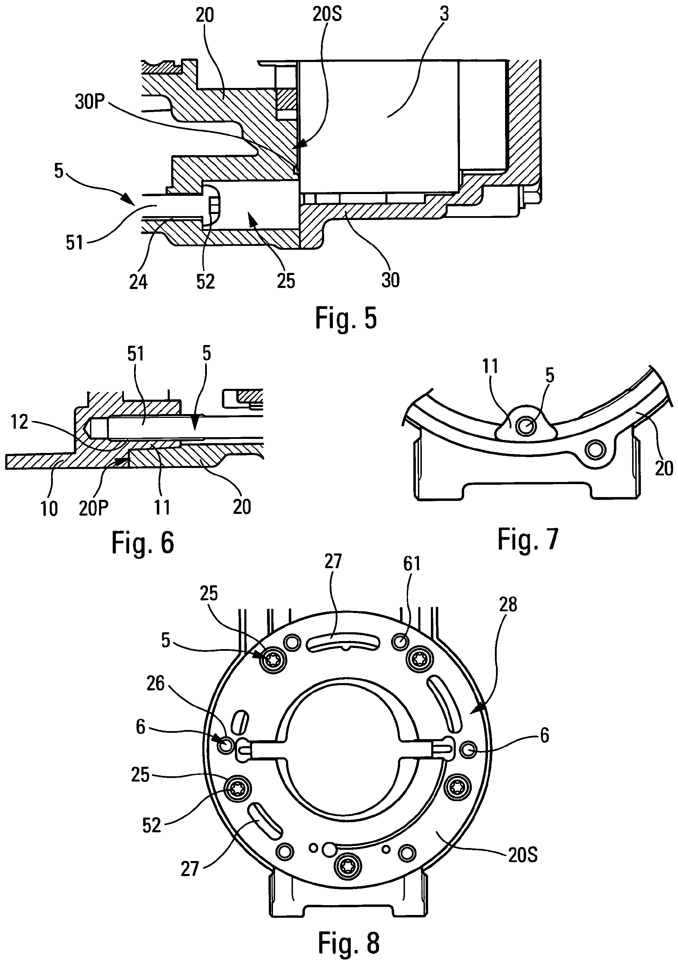

La seconde extrémité 20S du boîtier de moteur 20 se présente sous la forme d'une embase plane transversale 28 comme représenté sur la figure 8. L'embase 28 comprend, dans cet exemple, une pluralité de cavités longitudinales 25 pour le positionnement des dispositifs de fixation 5, une pluralité de lumières traversantes 27 agencées pour guider le flux de fluide réfrigérant circulant dans les évidements 22 vers le boîtier de compression 30 et une pluralité de taraudages 26 formés longitudinalement dans l'embase 28 pour recevoir des dispositifs de solidarisation 6 du boîtier de compression 30 au boîtier de moteur 20.

En référence plus particulièrement à la figure 5, les cavités longitudinales 25 sont formées à la périphérie de l'embase 28 et le trou 24 est formé dans le prolongement de chaque cavité longitudinale 25. De préférence, chaque dispositif de fixation 5 comprend un corps longitudinal 51 s'étendant dans le trou 24 et une tête 52 en butée avec le fond de la cavité longitudinale de positionnement 25. Le dispositif de fixation 5 se présente, dans cet exemple, sous la forme d'une vis de fixation dont le corps 51 est fileté afin de pouvoir s'étendre dans le trou 24 et est vissé dans une excroissance 11 du boîtier d'onduleur 10, comme cela sera présenté par la suite. Ainsi, chaque dispositif de fixation 5 s'étend dans un trou 24 du boîtier de moteur 20. Chaque cavité longitudinale 25 possède une section transversale de forme circulaire adaptée au diamètre de la tête 52 du dispositif de fixation 5 comme représenté sur la figure 5, la section transversale du trou 24 dans lequel s'étend le corps 51 étant plus faible que celle de la cavité longitudinale 25. La longueur axiale de la cavité longitudinale 25 permet avantageusement de limiter la longueur du corps 51 du dispositif de fixation 5. En effet, la longueur longitudinale du dispositif de fixation 5 est plus courte que la longueur longitudinale du boîtier de moteur 20 du fait de la présence des cavités longitudinales 25 qui s'étendent intérieurement au volume du boîtier de moteur 20 et permettent à la tête 52 du dispositif de fixation 5 d'être en butée avec une paroi située intérieurement au boîtier de moteur 20.

Comme présenté précédemment, au cours de sa fabrication, les dispositifs de fixation 5 subissent une étape de durcissement thermique qui engendre des tensions de surface résiduelles qui sont fonction de la longueur du dispositif de fixation. Plus le dispositif de fixation est court, plus sa fabrication est aisée.

Toujours en référence à la figure 5, le boîtier de compression 30 comprend une portion de surface plane 30P, s'étendant transversalement à l'axe du moteur X, qui vient en contact avec la surface plane de l'embase 28 afin de former une étanchéité vis-à-vis du fluide réfrigérant F circulant dans les boîtiers de moteur 20 et de compression 30. Il n'est ainsi pas nécessaire de prévoir des joints d'étanchéité individuels pour chaque dispositif de fixation 5, la liaison du boîtier de compression 30 au boîtier de moteur 20 assurant l'étanchéité sans moyens additionnels.

Comme représenté sur la figure 8, la pluralité de lumières traversantes 27 de l'embase 28 permet avantageusement de guider le fluide réfrigérant F admis par l'orifice d'admission 21 vers le boîtier de compression 30. Les évidements 22 du boîtier de moteur 20 sont aptes à canaliser le fluide réfrigérant F depuis l'orifice d'admission 21 vers une lumière traversante 27 de l'embase 28 pour former une canalisation interne au boîtier de moteur 20 dont la section de passage est suffisante pour limiter les pertes de charge. Dans cet exemple, les lumières traversantes 27 s'étendent longitudinalement et possèdent une section axiale se présentant sous la forme d'arcs de cercle formés sur l'embase 28 à une même distance radiale de l'axe X du moteur 2 (Figure 8). Il va de soi que les lumières traversantes 27 pourraient se présenter sous diverses formes afin de calibrer de manière optimale la pression du fluide réfrigérant dans le boîtier de moteur 20.

Les taraudages 26 de l'embase 28 s'étendent longitudinalement pour recevoir des dispositifs de solidarisation 6 du boîtier de compression 30 au boîtier de moteur 20. Les dispositifs de solidarisation 6 s'étendent intérieurement au compresseur dans le boîtier de compression 30. De préférence, chaque dispositif de solidarisation 6 comprend un corps longitudinal 61 s'étendant au moins partiellement dans le taraudage 26 et une tête 62 en butée contre une face transversale du boîtier de compression 30. Le dispositif de solidarisation 6 se présente, dans cet exemple, sous la forme d'une vis de fixation dont le corps 61 est fileté afin de pouvoir être vissé dans le taraudage 26 de l'embase 28. Les taraudages 26 sont répartis sur l'embase 28 et sont, de préférence, intercalés avec les cavités de positionnement 25. De manière préférée, au moins un taraudage 26 est formé dans l'embase 28 entre deux cavités consécutives 25 de manière à répartir les dispositifs de fixation 5 et les dispositifs de solidarisation 6 sur l'embase 28.

Le compresseur 7 selon l'invention est modulaire. Les boîtiers d'onduleur 10 et de moteur 20 sont solidarisés au cours d'une première étape par les dispositifs de fixation 5. Puis, les boîtiers de moteur 20 et de compression 30 sont solidarisés au cours d'une deuxième étape par les dispositifs de solidarisation 6. Un tel montage est simple à mettre en oeuvre et permet de bénéficier d'une architecture modulaire dans laquelle chaque module peut-être conçu, testé et validé de manière indépendante. En outre, cela permet avantageusement de ne recourir qu'à des dispositifs de fixation et de solidarisation de faible longueur qui présentent un coût faible et une meilleure durée de vie.

L'embase 28 du boîtier de moteur 20 remplit avantageusement une fonction d'interface de liaison en permettant, d'une part, d'introduire les dispositifs de fixation 5 et, d'autre part, de recevoir les dispositifs de solidarisation 6. L'embase 28 permet en outre la circulation du fluide réfrigérant F entre les boîtiers de moteur 20 et de compression 30.

Etant donné que la pression dans le boîtier de moteur 20 est plus faible que celle dans le boîtier de compression 30, les dispositifs de solidarisation 6 doivent assurer un maintien supérieur à celui assuré par les dispositifs de fixation 5. A cet effet, afin de limiter la masse globale du compresseur 7 ainsi que son encombrement, le diamètre des dispositifs de fixation 5 peut être inférieur au diamètre dispositifs de solidarisation 6 et le nombre de dispositifs de fixation 5 peut être inférieur au nombre de dispositifs de solidarisation 6.

En référence aux figures 3, 6 et 7, le boîtier d'onduleur 10 comprend une pluralité d'excroissances 11, de forme sensiblement tubulaire, en contact avec la périphérie interne du boîtier de moteur 20, s'étendant longitudinalement dans le boîtier de moteur 20, chaque excroissance 11 comportant un trou 12 de réception d'un dispositif de fixation 5. Dans cet exemple, les trous de réception 12 sont borgnes et taraudés afin de recevoir l'extrémité du corps fileté 51 des dispositifs de fixation 5.

Les excroissances 11 du boîtier d'onduleur 10 remplissent de manière avantageuse une double fonction. Premièrement, elles permettent de positionner précisément le boîtier onduleur 10 par rapport au boîtier de moteur 20 étant donné qu'elles sont en contact avec la périphérie interne du boîtier de moteur 20. Deuxièmement, elles permettent de fixer les deux boîtiers 10, 20 en limitant la longueur des dispositifs de fixation 5. En effet, à la manière des cavités de positionnement 25 qui s'étendent vers le centre du boîtier de moteur 20 depuis la seconde extrémité 20S, les protubérances 11 s'étendent vers le centre du boîtier de moteur 20 depuis la première extrémité 20P afin de limiter la longueur longitudinale des dispositifs de fixation 5. Plus le corps 51 est court et plus sa fabrication est aisée.

En outre, étant donné que les excroissances 11 s'étendant longitudinalement dans le boîtier de moteur 20, l'espace disponible pour les composants électroniques de l'onduleur 1 dans le boîtier d'onduleur 10 est important et permet le montage d'une carte de circuit imprimé pour l'onduleur 1 dont les dimensions sont sensiblement égales à celles de la section transversale du boîtier d'onduleur 10.

## Revendications

1. Compresseur électrique (7) comprenant un mécanisme de compression (3), un moteur électrique (2) d'entraînement du mécanisme de compression (3), ledit moteur électrique présentant un axe de rotation (X), un onduleur (1) d'alimentation dudit moteur électrique (2), l'onduleur (1) étant monté dans un boîtier d'onduleur (10), le mécanisme de compression (3) étant monté dans un boîtier de compression (30), le moteur électrique (2) étant monté dans un boîtier (20) s'étendant longitudinalement selon l'axe de rotation (X) et présentant une première extrémité (20P) reliée au boîtier d'onduleur (10) par une pluralité de dispositifs de fixation (5) s'étendant intérieurement au boîtier de moteur (20), le boîtier de moteur (20) présentant une seconde extrémité (20S), opposée à la première extrémité (20P) par rapport au moteur électrique (2), reliée au boîtier de compression (30) par une pluralité de dispositifs de solidarisation (6) distincts des dispositifs de fixation (5), **caractérisé en ce que** la seconde extrémité (20S) du boîtier de moteur (20) se présente sous la forme d'une embase plane transversale (28), ladite embase (28) comportant une pluralité de cavités longitudinales (25) de positionnement des dispositifs de fixation (5).

2. Compresseur selon la revendication 1, dans lequel, chaque dispositif de fixation (5) possède une longueur longitudinale inférieure à la longueur longitudinale du boîtier de moteur (20).

3. Compresseur selon l'une des revendications 1 à 2, dans lequel, la pluralité de dispositifs de solidarisation (6) s'étend intérieurement au boîtier de compression (30).

4. Compresseur selon l'une des revendications 1 à 3, ladite embase (28) comportant une pluralité de taraudages (26) de réception d'un dispositif de solidarisation (6).

5. Compresseur selon l'une des revendications 1 à 4, dans lequel au moins un taraudage (26) est formé dans l'embase (28) entre deux cavités consécutives (25).

6. Compresseur selon l'une des revendications 1 à 5, dans lequel, ladite embase (28) comprend au moins une lumière traversante (27) agencée pour guider un fluide réfrigérant (F) vers les moyens de compression (3).

7. Compresseur selon l'une des revendications 1 à 6, dans lequel, le diamètre des dispositifs de fixation (5) est inférieur au diamètre des dispositifs de solidarisation (6).

8. Compresseur selon l'une des revendications 1 à 7, dans lequel, le nombre de dispositifs de fixation (5) est inférieur au nombre de dispositifs de solidarisation (6).

9. Compresseur selon l'une des revendications 1 à 8, dans lequel, le boîtier d'onduleur (10) comprend une pluralité d'excroissances (11) s'étendant longitudinalement dans le boîtier de moteur (20), chaque excroissance (11) comportant un trou taraudé (12) de réception d'un dispositif de fixation (5).

## Patentansprüche

1. Elektrischer Verdichter (7), der einen Verdichtungsmechanismus (3), einen elektrischen Motor (2) zum Antrieb des Verdichtungsmechanismus (3), wobei der elektrische Motor eine Drehachse (X) aufweist, einen Wechselrichter (1) zur Speisung des elektrischen Motors (2) umfasst, wobei der Wechselrichter (1) in einem Wechselrichtergehäuse (10) befestigt ist, wobei der Verdichtungsmechanismus (3) in einem Verdichtungsgehäuse (30) befestigt ist, wobei der elektrische Motor (2) in einem Gehäuse (20) befestigt ist, das sich in Längsrichtung entlang der Drehachse (X) erstreckt und ein erstes Ende (20P) aufweist, das mit dem Wechselrichtergehäuse (10) durch eine Mehrheit von Fixierungsvorrichtungen (5) verbunden ist, die sich im Inneren des Motorgehäuses (20) erstrecken, wobei das Motorgehäuse (20) ein zweites Ende (20S) entgegengesetzt zu dem ersten Ende (20P) im Verhältnis zu dem elektrischen Motors (2) aufweist, das mit dem Verdichtungsgehäuse (30) durch eine Mehrheit von Befestigungsvorrichtungen (6) verbunden ist, die sich von den Fixierungsvorrichtungen (5) unterscheiden, **dadurch gekennzeichnet, dass** das zweite Ende (20S) des Motorgehäuses (20) in Form einer planaren Querbasis (28) vorliegt, wobei die Basis (28) eine Mehrheit von Längshohlräumen (25) zur Positionierung der Fixierungsvorrichtungen (5) umfasst.

2. Verdichter nach Anspruch 1, bei dem jede Fixierungsvorrichtung (5) eine in Längsrichtung verlaufende Länge aufweist, die weniger als die in Längsrichtung verlaufende Länge des Motorgehäuses (20) beträgt.

3. Verdichter nach einem der Ansprüche 1-2, bei dem sich die Mehrheit von Befestigungsvorrichtungen (6) innerhalb des Verdichtungsgehäuses (30) erstrecken.

4. Verdichter nach einem der Ansprüche 1-3,
wobei die Basis (28) eine Mehrheit von Innengewinden (26) zur Aufnahme einer Befestigungsvorrichtung (6) umfasst.

5. Verdichter nach einem der Ansprüche 1-4, bei dem mindestens ein Innengewinde (26) in der Basis (28) zwischen zwei aufeinanderfolgenden Hohlräumen (25) ausgebildet ist.

6. Verdichter nach einem der Ansprüche 1-5, bei dem die Basis (28) mindestens ein Durchgangsloch (27) umfasst, das zum Leiten eines Kühlmittels (F) zu den Verdichtungsmitteln (3) angeordnet ist.

7. Verdichter nach einem der Ansprüche 1-6, bei dem der Querschnitt der Fixierungsvorrichtungen (5) weniger als der Querschnitt der Befestigungsvorrichtungen (6) beträgt.

8. Verdichter nach einem der Ansprüche 1-7, bei dem die Anzahl an Fixierungsvorrichtungen (5) unter der Anzahl an Befestigungsvorrichtungen (6) liegt.

9. Verdichter nach einem der Ansprüche 1-8, bei dem das Wechselrichtergehäuse (10) eine Mehrheit von Vorsprüngen (11) umfasst, die sich in Längsrichtung in dem Motorgehäuse (20) erstrecken, wobei jeder Vorsprung (11) eine Gewindebohrung (12) zur Aufnahme einer Fixierungsvorrichtung (5) umfasst.

## Claims

1. Electric compressor (7) comprising a compression mechanism (3), an electric motor (2) driving the compression mechanism (3), said electric motor having an axis of rotation (X), an inverter (1) powering said electric motor (2), the inverter (1) being mounted in an inverter housing (10), the compression mechanism (3) being mounted in a compression housing (30), the electric motor (2) being mounted in a housing (20) extending longitudinally along the axis of rotation (X) and having a first end (20P) linked to the inverter housing (10) by a plurality of fastening devices (5) extending inside the motor housing (20), the motor housing (20) having a second end (20S) opposite the first end (20P) relative to the electric motor (2), linked to the compression housing (30) by a plurality of securing devices (6) which are different from the fastening devices (5), **characterized in that** the second end (20S) of the motor housing (20) takes the form of a transversal planar base (28), said base (28) comprising a plurality of longitudinal cavities (25) for positioning the fastening devices (5).

2. Compressor according to Claim 1, in which each fastening device (5) has a longitudinal length which is less than the longitudinal length of the motor housing (20).

3. Compressor according to one of Claims 1 or 2, in which the plurality of securing devices (6) extends inside the compression housing (30).

4. Compressor according to one of Claims 1 to 3, said base (28) comprising a plurality of tappings (26) for receiving a securing device (6).

5. Compressor according to one of Claims 1 to 4, in which at least one tapping (26) is formed in the base (28) between two consecutive cavities (25).

6. Compressor according to one of Claims 1 to 5, in which said base (28) comprises at least one through opening (27) arranged to guide a refrigerant (F) toward the compression means (3).

7. Compressor according to one of Claims 1 to 6, in which the diameter of the fastening devices (5) is less than the diameter of the securing devices (6).

8. Compressor according to one of Claims 1 to 7, in which the number of fastening devices (5) is less than the number of securing devices (6).

9. Compressor according to one of Claims 1 to 8, in which the inverter housing (10) comprises a plurality of excrescences (11) extending longitudinally into the motor housing (20), each excrescence (11) comprising a tapped hole (12) for receiving a fastening device (5).
